# EUROPÄISCHE PATENTSCHRIFT

(11) **EP 1 124 197 B1**
(45) Veröffentlichungstag und Bekanntmachung des Hinweises auf die Patenterteilung: **30.08.2006**
(21) Anmeldenummer: 01102296.9
(22) Anmeldetag: 01.02.2001
(51) Int. Cl.: G06K 19/00, G06K 19/07, G07C 9/00, G06K 7/00

(54) **Verfahren zur Erhöhung der Manipulationssicherheit bei einer bidirektionalen, kontaktlosen Datenübertragung**
Procedure to increase safety in a bi-directional, contactless data transfer
Procedure por améliorer la securité dans une transmission de données bidirectionnelle et sans contact

(30) Priorität: 08.02.2000 DE 10005503
(43) Veröffentlichungstag der Anmeldung: 16.08.2001
(73) Patentinhaber: ATMEL Germany GmbH, 74072 Heilbronn (DE)
(72) Erfinder: Blatz, Werner, 74211 Leingarten (DE); Schwarzmüller, Marco, 74080 Heilbronn (DE)

(56) Entgegenhaltungen:
- DE-A- 3 820 353
- DE-A- 4 020 445
- DE-A- 4 205 827
- DE-A- 19 827 722
- US-A- 5 504 485

## Beschreibung

Die vorliegende Erfindung betrifft ein Verfahren zur Erhöhung der Manipulationssicherheit bei einer bidirektionalen kontaktlosen Datenübertragung gemäß dem Oberbegriff des Patentanspruchs 1

Systeme zur bidirektionalen, kontaktlosen Datenübertragung werden vorzugsweise bei Identifikationssystemen eingesetzt. Diese bestehen aus einem Transponder, der entweder in einem Schlüsselanhänger oder einer sogenannten Smartcard integriert ist und einer stationären Basiseinheit. Im KFZ - Bereich, einem der Haupteinsatzgebiete für die Transponder-Technik, ist die Basiseinheit im Auto eingebaut. Die Kommunikation zwischen Transponder und Basiseinheit basiert auf einer induktiven Kopplung, wobei zur Kommunikation zwischen Transponder und Basiseinheit im Allgemeinen entweder das undirektionale oder das bidirektionale Protokoll verwendet wird. Der Gesamtprozeß der Identifikation von Transponder bzw. Basiseinheit wird als Authentifizierung bezeichnet. Sofern der Transponder keine eigene Stromversorgung besitzt oder diese leer ist, bezieht er seine Energie aus dem von der Basiseinheit ausgesandten NF-Feld. In diesen Fällen ist die Reichweite für eine Datenübertragung auf wenige cm begrenzt. In den anderen Fällen wird die Reichweite von den Sicherheitsanforderungen und den Systemgrenzen bestimmt. Sofern eine besonders hohe Sicherheit bei der ldentifikation verlangt wird, beispielweise beim sogenannten "passiv entry" d.h. beim Öffnen des Fahrzeuges durch Ziehen am Türgriff, wird die Kommunikationsentfernung unter Verwendung des bidirektionalen Protokolls auf 2.5 m beschränkt. Hierfür wird bei der Kommunikation vom Auto zum Schlüssel vorzugsweise eine NF-Trägerfrequenz bei 125 KHz eingesetzt, während bei der Kommunikation vom Schlüssel zum Auto eine Trägerfrequenz vorzugsweise im UHF-Bereich von 433.92 MHz verwendet wird. Bei reduzierter Anforderung an die Sicherheit, beispielsweise wie beim aktiven Öffnen durch Drücken auf den Schlüsselschalter beim Auto, wird eine Reichweite im Bereich bis 30 m zugelassen. Hierfür wird im Allgemeinen das unidirektionale Protokoll in Verbindung mit einer UHF-Trägerfrequenz bei 433.92 MHz verwendet.
Aus der DE 3820353 A1 ist beispielsweise eine Diebstahlwarneinrichtung mit Sicherheitsetiketten, die ein Signal in einem Hochfrequenzfeld aussenden, bekannt, welches zur Authentifizierung an der Basiseinheit und zur Vermeidung vom Empfang von Störsignalen bezüglich seiner Frequenz umgesetzt wird. Allerdings eignen sich diese Sicherheitsetiketten nicht zur Übertragung von weiteren Daten und Informationen.
Die höhere Sicherheit des bidirektionalen Protokolls bei dem Authentifizierungsprozeß besteht darin, daß gegenüber dem unidirektionalen Protokoll, das nur eine Berechtigungsprüfung des Transponders vorsieht, auch die Basiseinheit mit authentifiziert wird. Bei allen Anwendungen in der Transpondertechnik ist es wichtig, daß die Zeit für den Authentifizierungsprozeß möglichst kurz bleibt. Insbesondere im KFZ- Bereich sollte die Gesamtzeit für die Authentifizierung unter 130ms bleiben. Dabei wird aufgrund der hohen Sicherheitsanforderungen vorzugsweise ein bidirektionales Protokoll eingesetzt. Um die Manipulationssicherheit, insbesondere bei dem bidirektionalen Protokoll weiter zu erhöhen, wird nach neuen Lösungen gesucht.

Aus der US 5504485 ist eine Transponder-Lesegerät-System bekannt, bei dem vom Lesegerät auf einer ersten niedrigen Frequenz ein codiertes Frequenzmuster an der Transponder übermittelt wird, worauf der Transponder aus dem übermittelten Frequenzmuster eine Codier-Information gewinnt. Anschließend verschlüsselt der Transponder ein in seinem Speicher festgelegtes Informationsmuster mit diesem Frequenzmuster, um es dann auf einen Hochfrequenz-Träger aufmoduliert an das Lesegerät zurück zu senden. Im Lesegerät findet daraufhin ein Vergleich statt, ob das empfangene Signal, das ursprünglich übermittelte codierte Frequenzmuster enthält.
Bei weiterem Stand der Technik, beispielsweise beschrieben in VDI Berichte Nr. 1415, 1998 läuft eine Authentifizierung bei einem bidirektionalen Protokoll nach folgendem Schema ab:
Sobald der Transponder über einen von einer Basiseinheit ausgesandten Weckbefehl, z.b. durch Betätigung des Türgriffes am Auto, aktiviert wurde, kann über eine wechselseitige Identifikationsprüfung eine Authentifizierung durchgeführt werden. Hierzu werden Zufallszahlen, sogenannte "Challenges" ausgetauscht, aus denen sowohl in dem Transponder als auch in der Basiseinheit, durch einen fest einprogrammierten Algorithmus Zahlen berechnet werden, die man als Antwort (Response) bezeichnet. Danach wird die berechnete Response zwischen Transponder und Basiseinheit wieder ausgetauscht und mit der selbst berechneten Response auf Übereinstimmung geprüft. Fallen diese Prüfungen sowohl bei Transponder als auch bei der Basiseinheit positiv aus, ist die Authentifizierung erfolgreich. Die zur Identifikation ausgetauschten Datensequenzen werden dabei auf die UHF-Trägerfrequenz aufmoduliert. Die Erzeugung der Trägerfrequenz erfolgt mit Hilfe eines Quarzes. Dessen Genauigkeit typischerweise bei ±100ppm liegt, bezogen auf die Trägerfrequenz von 433.92 MHz entspricht dies einer Genauigkeit von ±43.392 KHz. Da sowohl Transponder als auch Basiseinheit mit einer eigenen Frequenzstabilisierung arbeiten und auch die jeweiligen Erregerschaltung für die Quarze eine Frequenzungenauigkeit aufweisen, ist die Eingangsbandbreite im jeweiligen Empfangsteil auf etwa 300-600 KHz ausgelegt, um eine stabile Kommunikation zu gewährleisten.

Durch die erhebliche Bandbreite der Eingangsfilter ist es jedoch möglich, mit geeigneten Hilfsmitteln die Kommunikationsstrecke zwischen Transponder und der Basiseinheit zusätzlich zu verlängern, ohne daß dies den Authentifizierungsprozeß bei einem bidirektionalen Protokoll stört. Da durch die Verlängerung wesentlich größere Entfernungen als 2.5 m überbrückt werden können, kann auch eine Manipulation nicht ausgeschlossen werden. Hierzu werden die von der Basiseinheit und dem Transponder ausgesandten Signale mit Hilfe von zwei handelsüblichen Funkverstärkern (repeater) weitergeleitet, indem sich ein Repeater in der Nähe der Basiseinheit befindet, während der andere Repeater in der Nähe des Transponders ist. Um eine Rückkopplung zu vermeiden, mischen beide die beispielsweise bei 433.92 MHz ausgesandten Signale auf ein anderes Frequenzband. Die dabei auftretende kleine Frequenzverschiebung wird durch die relativ breiten Eingangsfilter nicht bemerkt. Je nach Sendeleistung der Repeater können auf diese Weise große Entfernungen überbrückt werden, um sich innerhalb kürzester Zeit (130ms) unauffällig einen unberechtigten Zugang beispielsweise zu einem KFZ zu verschaffen. Um diese erhebliche Sicherheitslücke bei der Authentifizierung auf der Grundlage einer bidirektionalen Datenübertragung zu schließen, sind Lösungen zu suchen, durch die eine ungewollte Verlängerung der Kommunikationsstrecke erkannt wird.

Aufgabe der vorliegenden Erfindung ist es, ein kostengünstiges Verfahren anzugeben, das bei einer bidirektionalen, kontaktlosen Datenübertragung eine ungewollte Verlängerung der Kommunikationsstrecke zwischen Basiseinheit und Transponder wesentlich erschwert und damit eine wesentlich erhöhte Manipulationssicherheit bietet. Die Gesamtauthentifizierungszeit darf sich dabei nicht erhöhen.

Diese Aufgabe wird erfindungsgemäß durch ein Verfahren der eingangs genannten Art mit den Merkmalen des Patentanspruches 1 gelöst. Günstige Ausgestaltungsformen sind Gegenstand von Unteransprüchen.

Untersuchungen der Anmelderin haben gezeigt, daß sich die Manipulationssicherheit des Systems Transponder Basiseinheit wesentlich erhöhen läßt, wenn bei einer bidirektionalen Kommunikation zwischen Transponder und Basiseinheit der Wert mindestens einer der physikalischen Größen der zum Informationsaustausch verwendeten elektromagnetischen Signalen reversibel geändert wird. Hierzu wird von einer Sendeeinheit, beispielweise die der Basiseinheit, ein elektromagnetisches Signal ausgesandt. Bei diesem dann vom Transponder empfangenen elektromagnetischen Signal wird dann der Wert einer der physikalischen Größen die das elektromagnetischen Signal kennzeichnet, geändert und danach das derart veränderte elektromagnetische Signal an die Basiseinheit zurückgesandt. In der Basiseinheit wird anschließend dieser Wert zurückgeändert. Anhand des Vergleiches, des reversibel geänderten Wertes der physikalischen Größe mit dessen ursprünglichen Wert kann dann geprüft werden, ob die Abweichung dieser physikalischen Größe in einem erwarteten Bereich liegt. Gegenüber dem bisherigen Authentifizierungsprozesses nach dem bidirektionalen Protokoll, das nur einen Vergleich von aus Zufallszahlen berechneten Zahlenwerten (Response) enthält, lässt sich durch den zusätzlichen Wertevergleich eine unzulässige Verlängerung der Kommunikationsstrecke zwischen Transponder und Basiseinheit erkennen. Die Genauigkeit des Verfahren ist dabei proportional zu der Größe des Zeitfensters, das für den Vergleich des reversibel geänderten Wert mit dem ursprünglichen Wert der physikalischen Größe, verwendet wird.

Gemäß einem ersten Ausführungsbeispiels, hat es sich als besonders vorteilhaft herausgestellt, wenn als physikalische Größe, deren Wert reversibel geändert wird, die Frequenz der elektromagnetischen Wellen benutzt wird. Realisiert wird dies, in dem eine UHF-Trägerfrequenz beispielsweise bei 433.92 MHz in der Basiseinheitl erzeugt und an den Transponder gesendet wird. Dabei kann auf dieser Trägerfrequenz zusätzlich ein Datensignal aufmoduliert sein. Im Transponder wird dann das Datensignal zur weiteren Auswertung abgetrennt und anschließend die empfangene UHF-Trägerfrequemz auf ein anderes Frequenzband umgesetzt. Nach der möglichen Modulation mit einem Datensignal wird dann die derart veränderte Trägerfrequenz an die Basiseinheit zurückgesendet. In der Basiseinheit wird nach der Rückumsetzung auf die ursprüngliche Trägerfrequenz ein Frequenzvergleich mit der ehemals ausgesandten Trägerfrequenz durchgeführt. Ist innerhalb des betrachteten Zeitfensters die ermittelte Frequenzverschiebung kleiner als ein vorgegebener Wert, kann eine unbefugte Verlängerung der Kommunikationsstrecke ausgeschlossen werden. Je nach Anwendungsfall kann diese Prüfung sowohl parallel als auch seriell zu der Berechnung der Antwortzahlen (Response) aus den ausgetauschten Zufallszahlen (Challenge) erfolgen. Die Authentifizierung von dem System Transponder und Basiseinheit ist erst dann positiv, wenn die Ergebnisse aller Einzelprüfungen positiv sind. Es hat sich dabei gezeigt, daß der gesamte Authentifizierungsprozeß in längstens 300ms abgeschlossen sein sollte.

Nachfolgend wird die Erfindung anhand eines Ausführungsbeispiels in Verbindung mit einer Zeichnung dargestellt und erläutert. Es zeigt:

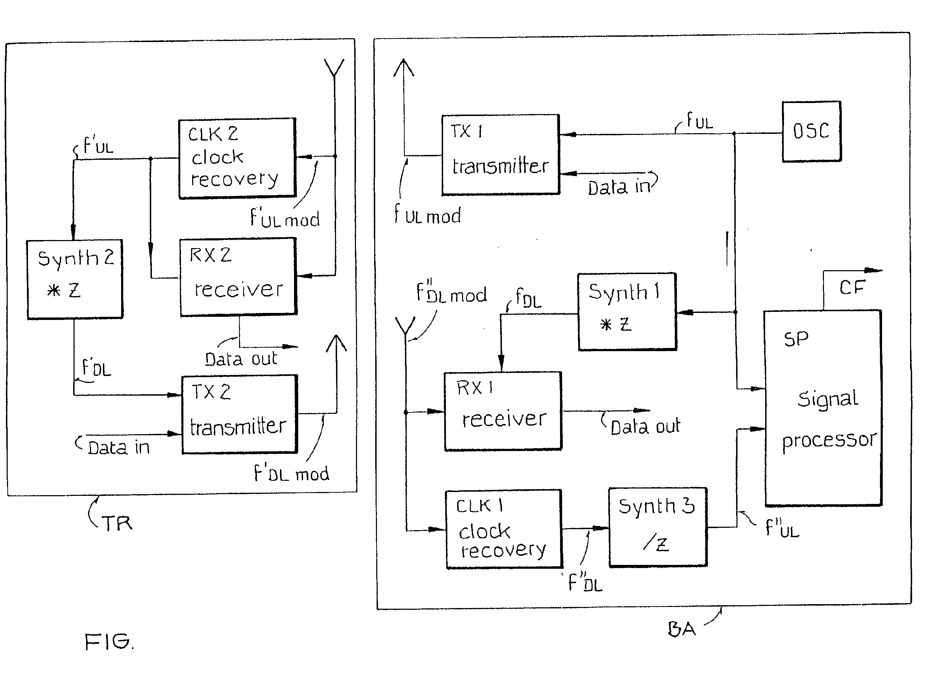

- Fig. 1: Ein Ausführungsbeispiel der Erfindung als Verfahren zur Überprüfung einer festen Frequenzbeziehung bei einer bidirektionalen Datenübertragung

In Figur 1 ist ein Ausführungsbeispiel des erfindungsgemäßen Verfahrens dargestellt. Wie abgebildet wird in der Basiseinheit die von einem Oszillator OSC erzeugte Trägerfrequenz fUL vom dem Transmitter TX1 mit einem Datensignal moduliert. Das so erzeugte Signal fULmod wird über eine Sendeeinheit abgestrahlt. Im Transponder wird aus dem empfangenen Signal f'ULmod mittels der Frequenzregeneriereinheit CLK2 die Frequenz f'UL erzeugt. Zusammen mit dem so erzeugten Signal f'UL und dem Eingangssignal f'ULmod wird im Receiver RX2 das aufmodulierte Datensignal zurückgewonnen. Aus der Frequenz f'UL wird mittels des Synthesizers Synth2 die Frequenz f'DL erzeugt, indem die Frequenz f'UL mit der Zahl Z multipliziert wird. Untersuchungen der Anmelderin haben gezeigt, daß es besonders vorteilhaft ist, wenn sich die Zahl Z aus einem Verhältnis zweier natürlicher Zahlen aufbaut. Im Transmitter TX2 werden die Sendedaten aufmoduliert und damit aus der Frequenz f'DL das Signal f'DLmod erzeugt und abgestrahlt. In der Basiseinheit werden aus dem empfangenen Signal f''DLmod mittels der Empfangseinheit RX1 die Transponderdaten wiedergewonnen. Die Empfangseinheit RX1 wird hierfür mittels der von dem Synthesizer Synth1 aus der Frequenz fUL mittels Muliplikation mit der Zahl Z erzeugten Frequenz fDL gespeist. Des weiteren wird aus dem empfangenen Signal f''DLmod mittels der Frequenzregeneriereinheit CLK1 die Frequenz f''DL erzeugt. Aus der Frequenz f''DL wird mittels des Synthesizers Synth3 die Frequenz f''UL erzeugt, indem sie durch die Zahl Z dividiert wird. Mittels des Signalprozessors SP wird die Differenz der beiden Frequenzen fUL und f''UL gebildet und über einen Zeitraum t mit einem vorgegebenen Grenzwert verglichen. Liegt dabei die Differenz der beiden Frequenzen fUL und f''UL unterhalb des gegebenen Grenzwertes, kann eine unbefugte Verlängerung der Kommunikationstrecke zwischen dem Transponder und der Basiseinheit ausgeschlossen werden. Ausgehend von einem Zeitfenster von beispielsweise 20ms, lassen sich so Frequenzverschiebungen von 1ppm, bei 433.92 MHz sind dies 433 Hz, zuverlässig erfassen. Dieser Wert ist damit etwa um einen Faktor 100 kleiner als der durch den bisherigen Stand der Technik gegebene Wert.

Im Unterschied zu der in Figur 1 dargestellten Ausführungsform des erfindungsgemäßen Verfahrens, bei dem die Authentifizierung mit jeweils einem Transponder und einer Basiseinheit durchgeführt wurde, kann das Verfahren auch zur Authentifizierung bei mehreren Transpondern bzw Basiseinheiten angewandt werden. Genauso kann ein Transponder als Ausgangspunkt für die Aussendung eines elektromagnetischen Signals gewählt werden.

## Patentansprüche

1. Verfahren zur Erhöhung der Manipulationssicherheit bei einer bidirektionalen kontaktlosen Datenübertragung mittels einer ersten Sende- und Empfangseinheit (BA) und einer zweiten Sende- und Empfangseinheit (TR)
• **dadurch gekennzeichnet, dass**
• die zweite Sende- und Empfangseinheit (TR) auf den Empfang eines von der ersten Sende- und Empfangseinheit (BA) gesendeten elektromagnetischen Signals (fulmod) dieses hinsichtlich wenigstens einer ausgewählten physikalischen Größe in ein Antwortsignal (f'DLmod) umsetzt und der ersten Sende- und Empfangseinheit (BA) zurücksendet, und
• auf den Empfang des Antwortsignals (f''DLmod) die erste Sende- und Empfangseinheit (BA) dieses Antwortsignal hinsichtlich der ausgewählten physikalischen Größe in ein Prüfsignal (f"UL) umsetzt, dass hierdurch die in der zweiten Sende- und Empfangseinheit (TR) erfolgte Umsetzung rückgängig gemacht, wird, und
• anschließend in der ersten Sende- und Empfangseinheit (BA) ein Vergleich zwischen dem Prüfsignal (f''UL) und dem gesendeten elektromagnetischen Signal (fUL) durchgeführt wird, bei dem innerhalb eines Zeitraums t untersucht wird, ob eine feste Beziehung hinsichtlich der ausgewählten physikalischen Größe vorliegt, und
• als Ergebnis (CF) dieses Vergleichs einer Manipulationsanzeige ein Wert zugeordnet wird.

2. Verfahren nach Anspruch 1, **dadurch gekennzeichnet, dass**, wenn das Ergebnis (CF) des Vergleichs unterhalb eines ausgewählten Grenzwertes liegt, der Manipulationsanzeige der Wert 0 zugewiesen wird.

3. Verfahren nach Anspruch 1, **dadurch gekennzeichnet, dass** als physikalische Größe für den Vergleich Phase, Amplitude oder Frequenz herangezogen wird.

4. Verfahren nach einem der vorangegangenen Ansprüche, **dadurch gekennzeichnet, dass** dieser Vergleich (SP) vorzugsweise in einem Zeitraum t1 von höchstens 300ms nach Aussendung des ursprünglichen elektromagnetischen Signals (fULmod) abgeschlossen ist.

5. Verfahren nach Anspruch 1, **dadurch gekennzeichnet, dass** dem elektromagnetischen Signal (fUL, f'DL) mittels Frequenz- oder Amplitudenmodulation eine Dateninformation aufmoduliert wird.

6. Verfahren nach einem der vorangegangenen Ansprüche, **dadurch gekennzeichnet, dass** der Vergleich (SP) nur anhand der Frequenz des elektromagnetischen Signals (f''UL, fUL) durchgeführt wird.

7. Verfahren nach einem der vorangegangenen Ansprüche, **dadurch gekennzeichnet, dass** in der zweiten Sende- und Empfangseinheit (TR), die Frequenz des empfangenen elektromagnetischen Signals (f'UL) mit einer Zahl (Z) multipliziert wird, und in der ersten Sende- und Empfangseinheit (BA) die Frequenz des empfangenen elektromagnetischen Signals (f''DL) durch diese Zahl (Z) dividiert wird.

8. Verfahren nach Anspruch 7, **dadurch gekennzeichnet, dass** die Multiplikation und Division mit einem Verhältnis aus zwei natürlichen Zahlen durchgeführt wird.

9. Verfahren nach einem der Ansprüche 6 bis 8, **dadurch gekennzeichnet, dass** wenn das Ergebnis (CF) des Frequenzvergleichs unterhalb eines ausgewählten Grenzwerts liegt, der Manipulationsanzeige der Wert 0 zugewiesen wird.

## Claims

1. Method of increasing the manipulation reliability in a bidirectional contactless data transmission by means of a first transmitting and receiving unit (BA) and a second transmitting and receiving unit (TR), **characterised in that** the second transmitting and receiving unit (TR) on reception of an electromagnetic signal (fulmod) transmitted by the first transmitting and receiving unit (BA) converts this with respect to at least one selected physical magnitude into a response signal (fDLmod) and transmits it back to the first transmitting and receiving unit (BA), on reception of the response signal (f'DLmod) the first transmitting and receiving unit (BA) converts this response signal with respect to the selected physical magnitude into a check signal (f'UL) so that thereby the conversion carried out in the second transmitting and receiving unit (TR) is reversed, subsequently a comparison between the check signal (f"UL) and the transmitted electromagnetic signal (fUL) is carried out in the first transmitting and receiving unit (BA) in which it is investigated within a time period t whether a fixed relationship with respect to the selected physical magnitude is present and as result (CF) of this comparison a value is assigned to manipulation display.

2. Method according to claim 1, **characterised in that** if the result (CF) of the comparison lies below a selected limit value the value 0 is allocated to the manipulation display.

3. Method according to claim 1, **characterised in that** phase, amplitude or frequency is utilised as physical magnitude for the comparison.

4. Method according to one of the preceding claims, **characterised in that** this comparison (SP) is concluded preferably in a time period t1 of at most 300 ms after transmission of the original electromagnetic signal (fULmod).

5. Method according to claim 1, **characterised in that** data information is modulated onto the electromagnetic signal (fUL, f'DL) by means of frequency or amplitude modulation.

6. Method according to any one of the preceding claims, **characterised in that** the comparison (SP) is carried out only on the basis of the frequency of the electromagnetic signal (f"UL, fUL).

7. Method according to one of the preceding claims, **characterised in that** the frequency of the received electromagnetic signal (fUL) is multiplied by a number (Z) in the second transmitting and receiving unit (TR) and the frequency of the received electromagnetic signal (f"DL) is divided by this number (Z) in the first transmitting and receiving unit (BA).

8. Method according to claim 7, **characterised in that** the multiplication and division is carried out by a ratio of two natural numbers.

9. Method according to one of claims 6 to 8, **characterised in that** if the result (CF) of the frequency comparison lies below a selected limit value the value 0 is allocated to the manipulation display.

## Revendications

1. Procédé pour améliorer la sécurité de manipulation dans une transmission de données bidirectionnelle et sans contact au moyen d'une première unité d'émission-réception (BA) et d'une deuxième unité d'émission-réception (TR),
**caractérisé en ce que**
. la deuxième unité d'émission-réception (TR), à réception d'un signal électromagnétique (fulmod) envoyé par la première unité d'émission-réception (BA), transforme celui-ci pour au moins une grandeur physique choisie en un signal de réponse (f'DLmod) et le renvoie à la première unité d'émission-réception (BA), et **en ce que**
. à réception du signal de réponse (f"DLmod), la première unité d'émission-réception (BA) transforme ce signal de réponse pour la grandeur physique choisie en un signal de contrôle (f"UL), annulant ainsi la transformation effectuée dans la deuxième unité d'émission-réception (TR), et **en ce que**
. l'on effectue ensuite dans la première unité d'émission-réception (BA) une comparaison entre le signal de contrôle (f"UL) et le signal électromagnétique envoyé (fUL), au cours de laquelle on étudie si à l'intérieur d'une durée "t" il existe une liaison forte en ce qui concerne la grandeur physique choisie, et **en ce que**
. comme résultat (CF) de cette comparaison on attribue une valeur à une signalisation de manipulation.

2. Procédé selon la revendication 1, **caractérisé en ce que** lorsque le résultat (CF) de la comparaison se situe en-dessous d'une valeur limite choisie, on attribue à la signalisation de manipulation la valeur 0.

3. Procédé selon la revendication 1, **caractérisé en ce que** l'on utilise la phase, l'amplitude ou la fréquence comme grandeur physique pour la comparaison.

4. Procédé selon l'une quelconque des revendications précédentes, **caractérisé en ce que** cette comparaison (SP) se termine de préférence dans un intervalle t1 d'au plus 300ms après l'émission du signal électromagnétique d'origine (fULmod).

5. Procédé selon la revendication 1, **caractérisé en ce que** l'on module sur le signal électromagnétique (fUL, f'DL) une information de données en modulant la fréquence ou l'amplitude.

6. Procédé selon l'une quelconque des revendications précédentes, **caractérisé en ce que** la comparaison (SP) n'est effectuée qu'à l'aide de la fréquence du signal électromagnétique (f"UL, fUL).

7. Procédé selon l'une quelconque des revendications précédentes, **caractérisé en ce que** dans la deuxième unité d'émission-réception (TR) on multiplie la fréquence du signal électromagnétique reçu (f'UL) par un nombre (Z), et **en ce que** dans la première unité d'émission-réception (BA), on divise la fréquence du signal électromagnétique reçu (f"DL) par ce nombre (Z).

8. Procédé selon la revendication 7, **caractérisé en ce que** la multiplication et la division sont effectuées dans un rapport de deux entiers naturels.

9. Procédé selon l'une quelconque des revendications 6 à 8, **caractérisé en ce que**, lorsque le résultat (CF) de la comparaison de fréquences se situe en-dessous d'une valeur limite choisie, on attribue à la signalisation de manipulation la valeur 0.
